# EUROPÄISCHE PATENTSCHRIFT

(11) **EP 2 502 874 B1**
(45) Veröffentlichungstag und Bekanntmachung des Hinweises auf die Patenterteilung: **22.05.2013**
(21) Anmeldenummer: 12000458.5
(22) Anmeldetag: 26.01.2012
(51) Int. Cl.: B66F 17/00, B62D 51/00, B62D 51/04, B62B 3/06

(54) **Deichselgeführtes Förderzeug**
Conveyor led by a tow bar
Chariot commandé par timon

(30) Priorität: 23.03.2011 DE 102011014768
(43) Veröffentlichungstag der Anmeldung: 26.09.2012
(73) Patentinhaber: Jungheinrich Aktiengesellschaft, 22047 Hamburg (DE)
(72) Erfinder: Jungclaus, Manfred, 20535 Hamburg (DE); Lohmann, Helmut, 27404 Nartum-Gyhum (DE); Röder, Matthias, 22523 Hamburg (DE)
(74) Vertreter: Hauck Patent- und Rechtsanwälte

(56) Entgegenhaltungen:
- DE-A1- 10 127 905
- DE-A1-102006 061 069
- US-A1- 2005 247 508
- US-A1- 2007 137 904

## Beschreibung

Die vorliegende Erfindung betrifft ein deichseigeführtes Flurförderzeug mit einer Betriebssteuerung für einen Fahrantrieb des Flurförderzeugs.

Deichselgeführte Flurförderzeuge mit einem elektrischen Fahrantrieb können unter anderem über ihre Deichsel gebremst werden. In der Regel geschieht dies, indem die Deichsel aus einem Fahrbereich an einen oberen oder unteren Anschlag verschwenkt wird. In diesem Anschlag erkennt ein Sensor, dass die Deichsel eine Bremsposition eingenommen hat und generiert ein Signal für eine Betriebssteuerung des Fahrzeugs, das beispielsweise eine Bremsung einleitet.

Aus DE 10 2006 061 069 A1 ist ein deichselgeführtes Flurförderzeug bekannt, das Mittel zum stufenlosen Erfassen des Schwenkwinkels der Deichsel um die horizontale Achse besitzt. Eine Betriebsbremsvorrichtung ist derart ausgebildet, dass die Bremswirkung abhängig von dem Schwenkwinkel und/oder der Schwenkgeschwindigkeit und/oder der Schwenkbeschleunigung um die horizontale Achse ist. Für die Erfassung des Schwenkwinkels der Deichsel ist im Deichselfuß ein Potentiometer angeordnet, das einen Widerstand abhängig von dem Schwenkwinkel ändert. Weiterhin sind für den Schwenkwinkel drei Winkelbereiche vorgesehen, wobei in dem Winkelbereich, in dem die Deichsel nahezu senkrecht steht, ebenso wie in dem Winkelbereich, in dem die Deichsel nahezu horizontal angeordnet ist, ein Bremsen des Flurförderzeugs auslöst wird.

Aus DE 101 27 905 A1 ist ein deichselgelenktes Flurförderzeug mit einer um eine horizontale Achse schwenkbaren Deichsel bekannt. Die maximale Fahrgeschwindigkeit des Flurförderzeugs kann in Abhängigkeit von dem Schwenkwinkel der Deichsel eingestellt werden. Für den Schwenkwinkel ist ein Winkelbereich vorgesehen, in dem die maximale Fahrgeschwindigkeit proportional zum Schwenkwinkel der Deichsel ist. Zur Erfassung des Schwenkwinkels ist ein kontinuierlicher oder inkrementeller Messwertgeber im Bereich des Deichselfußes angeordnet.

Die bekannten deichselgeführten Flurförderzeuge besitzen den Nachteil, dass ein Schwenkwinkel lediglich relativ zwischen Deichselarm und Fahrzeugkörper erfasst wird. Hierdurch können unbeabsichtigt Funktionen ausgelöst werden, beispielsweise wenn sich der Winkel zwischen Deichselarm und Fahrzeug aufgrund einer Neigung im Untergrund ändert. Bei einer abschüssigen Rampe, bei der die Bedienperson sich bereits im horizontalen Bereich befindet, vergrößert sich automatisch der Schwenkwinkel, ohne dass dies von der Bedienperson gewollt ist.

Der Erfindung liegt die Aufgabe zugrunde, ein deichselgeführtes Flurförderzeug bereitzustellen, bei dem Steuerfunktionen an dem Flurförderzeug in einfacher und zuverlässiger Weise über die Deichsel ausgeführt werden können.

Erfindungsgemäß wird die Aufgabe durch ein deichselgeführtes Flurförderzeug mit den Merkmalen aus Anspruch 1 gelöst.

Das erfindungsgemäße deichselgeführte Flurförderzeug ist mit einer Betriebssteuerung für einen Fahrantrieb und/oder einen Hubantrieb des Flurförderzeugs ausgestattet. Die Deichsel zum Führen des Flurförderzeugs ist an einem Fahrzeugkörper angelenkt und besitzt einen Arm sowie einen Kopf. Im Nachfolgenden wird die allgemein übliche Definition verwendet, dass eine Bewegung der Deichsel um eine horizontale Achse, die quer zur Längsrichtung des Fahrzeugskörpers steht, als Schwenkbewegung bezeichnet wird und eine Bewegung der Deichsel quer zu einer Schwenkbewegung, also um eine vertikal verlaufende Achse, als Lenkbewegung der Deichsel bezeichnet wird. Geometrisch betrachtet bewegt sich der Deichselkopf innerhalb seines zulässigen Bewegungsbereichs auf einer Kugelfläche.

Erfindungsgemäß ist in dem Arm oder an dem Kopf der Deichsel ein Drehbewegungssensor angeordnet, der eine Bewegung der Deichsel um mindestens eine Achse erfasst. Im Unterschied zu den aus dem Stand der Technik bekannten Sensoren erfasst ein Drehbewegungssensor nicht den Winkel der Deichsel, sondern lediglich eine Winkelgeschwindigkeit und/oder eine Winkelbeschleunigung der Deichsel im Raum. Erfindungsgemäß ist ferner ein Auswertemodul vorgesehen, das ein Steuersignal für die Betriebssteuerung des Flurförderzeugs erzeugt, wenn die erfasste Bewegung der Deichsel einen vorbestimmten Wert überschreitet. Es werden also keine vordefinierten Winkelbereiche zum Steuern des Flurförderzeugs eingesetzt, sondern eine Winkelbewegung oder eine Winkelbeschleunigung, die einen vorbestimmten Wert überschreitet, wird dafür eingesetzt, um ein Steuersignal zu generieren. Bei der Rampenfahrt des deichselgeführten Flurförderzeugs bedeutet dies zwar, dass wenn die Bedienperson durch das Betreten oder Verlassen der Rampe ihre Position relativ zu dem Fahrzeugkörper ändert, Bewegungs- oder Beschleunigungssignale von dem Drehbewegungssensor erfasst werden, diese aber nicht so groß wie bei einer absichtlichen Schwenk- oder Lenkbewegung des Deichselkopfs sind und daher kein Steuersignal auslösen. Da anders als im Stand der Technik eine absolute Bewegung der Deichsel im Raum erfasst wird und nicht eine relative Winkelposition zwischen Deichsel und Fahrzeugkörper, können durch die Wahl vorbestimmter Werte für die Winkelgeschwindigkeit und/oder Beschleunigung unbeabsichtigte von beabsichtigten Änderungen der Deichselposition voneinander unterschieden werden.

In einer bevorzugten Ausgestaltung ist das Auswertemodul, an dem die Signale des Drehbewegungssensors anliegen, in dem Kopf oder dem Arm der Deichsel angeordnet. Die Steuersignale des Auswertemoduls können dann in einer an sich bekannten Weise, wie andere im Deichselkopf erzeugte Steuersignale an die Betriebssteuerung des Flurförderzeugs weitergeleitet werden.

Der Drehbewegungssensor erfasst bevorzugt eine Winkelgeschwindigkeit und/oder eine Winkelbeschleunigung. Hierdurch kann die Bewegung der Deichsel absolut im Raum erfasst werden, unabhängig von der relativen Position der Deichsel zum Fahrzeugkörper. Bevorzugt wird für den Drehbewegungssensor ein Gyrosensor verwendet. Es können auch ein oder mehrere Beschleunigungssensoren vorgesehen sein.

In einer bevorzugten Ausgestaltung erfasst der Drehbewegungssensor eine Bewegung der Deichsel um ihre Lenkachse und eine Bewegung der Deichsel um ihre Schwenkachse. Bei dieser Ausgestaltung liegen an dem Steuermodul somit zwei erfasste Bewegungssignale vor, die entweder bereits separat gemessen oder aus dem gemessenen Bewegungssignal gewonnen werden.

In einer alternativen Ausgestaltung werden die beiden Bewegungssignale im Hinblick auf die Schwenkachse und auf die Lenksache durch zwei Bewegungssensoren erfasst werden. Hierbei erfasst ein erster Bewegungssensor eine Bewegung der Deichsel um ihre Lenkachse und ein zweiter Bewegungssensor eine Bewegung der Deichsel um ihre Schwenkachse.

In einer bevorzugten Ausgestaltung erzeugt das Auswertemodul ein erstes Steuersignal, wenn die erfasste Bewegung um die Lenkachse einen vorbestimmten Wert überschreitet. Bevorzugt erzeugt das Auswertemodul ein zweites Steuersignal, wenn die erfasste Bewegung um die Schwenkachse einen zweiten vorbestimmten Wert überschreitet. In dieser Ausgestaltung kann der Betriebssteuerung des Flurförderzeugs somit zwei unabhängig voneinander erzeugte Steuersignale zur Verfügung gestellt werden, die von dieser für die Steuerung des Fahrzeugs ausgewertet werden können.

In einer bevorzugten Ausgestaltung reduziert die Betriebssteuerung ansprechend auf das Steuersignal einer Fahrgeschwindigkeit. In der Ausgestaltung, in der zwei Steuersignale von dem Auswertemodul erzeugt werden, reduziert die Betriebssteuerung ansprechend auf das erste Steuersignal, das durch eine Bewegung um die Schwenkachse generiert wurde seine Fahrgeschwindigkeit. Die Reduktion der Fahrgeschwindigkeit kann beispielsweise erfolgen, indem das Fahrzeug in definierter Weise abgebremst wird.

In einer weiteren bevorzugten Ausgestaltung reduziert die Betriebssteuerung ansprechend auf das Steuersignal eine Beschleunigung des Fahrantriebs. Hier kann bei der Ausgestaltung des Auswertemoduls zur Erzeugung von zwei Steuersignalen auf eines der beiden Steuersignale, bevorzugt auf das erste Steuersignal abgestellt werden.

In einer weiteren bevorzugten Ausgestaltung reduziert die Betriebssteuerung ansprechend auf das Steuersignal eine Hub- und/oder Senkgeschwindigkeit einer an dem Fahrzeug vorgesehenen Hubvorrichtung. In der Ausgestaltung, in der das Auswertemodul zwei Steuersignale erzeugt, erfolgt bevorzugt ein Absenken der Hub- oder Senkgeschwindigkeit abhängig von dem zweiten Steuersignal.

In einer besonders bevorzugten Ausgestaltung ist vorgesehen, dass die Betriebssteuerung ansprechend auf ein Steuersignal ein Warnsignal, wie beispielsweise eine Hupe auslöst. Im Fall, dass unerwartete Situationen eintreten, kann es zu sehr starken Bewegungen der Deichsel kommen, die ein Hupen auslösen.

Die Erfindung wird nachfolgend an einem Ausführungsbeispiel näher erläutert. Es zeigt:
Fig. 1 ein deichselgeführtes Flurförderzeug mit einem Drehbewegungssensor im Deichselkopf zur Erfassung einer Schwenkbewegung,
Fig. 2 das deichselgeführte Flurförderzeug aus Fig. 1 in einer Ansicht von oben mit einem Drehbewegungssensor im Deichselkopf zur Erfassung einer Lenkbewegung,
Fig. 3 ein Flussdiagramm zur Reduzierung der Fahrgeschwindigkeit abhängig von der Winkelgeschwindigkeit einer Deichselbewegung und
Fig. 4 ein Flussdiagramm zur Erzeugung von zwei Steuersignalen abhängig von der Winkelgeschwindigkeit einer Lenk- und einer Schwenkbewegung.

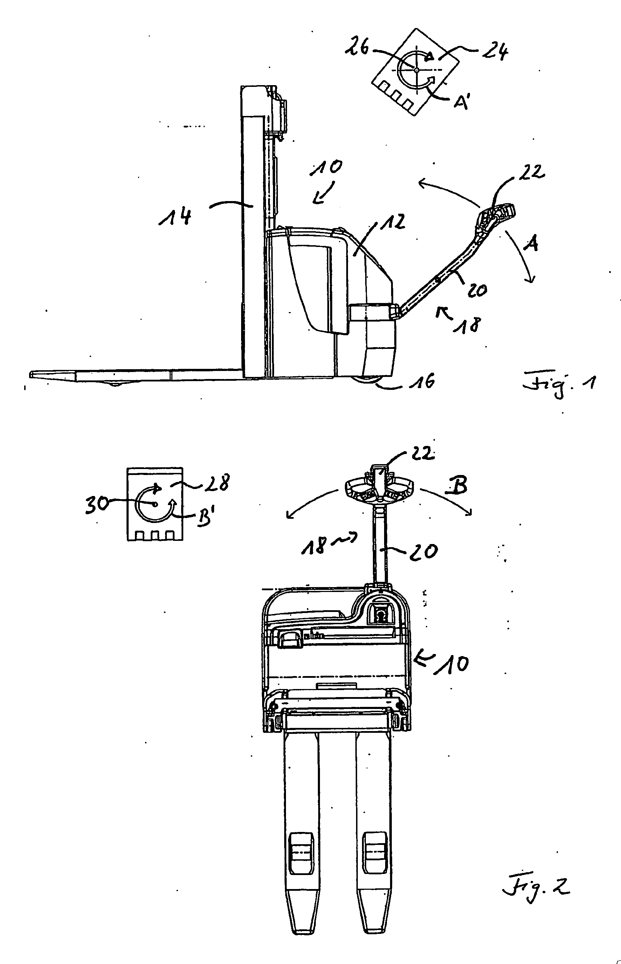

Fig. 1 zeigt ein deichselgeführtes Flurförderzeug 10 in einer Ansicht von der Seite. Das Flurförderzeug besitzt ein Antriebsteil 12 mit einer Hubvorrichtung 14. In dem Antriebsteil 12 ist ein elektrischer Motor (nicht dargestellt) vorgesehen, der drehbar gelagert ist und ein Antriebsrad 16 elektrisch antreibt. Geführt wird das Flurförderzeug durch eine Deichsel 18, die ein Deichselarm 20 und einen Deichselkopf 22 besitzt. Der Deichselkopf 22 ist mit Bedienelementen ausgestattet, über die beispielsweise die Fahrgeschwindigkeit und der Heb- und Senkbetrieb gesteuert werden kann. Die Deichsel 18 ist entlang der durch Doppelpfeile A dargestellten Richtung verschwenkbar. Ein Drehbewegungssensor 24, der nicht maßstabsgerecht in Fig. 1 separat gezeichnet ist, ist in dem Deichselkopf 22 angeordnet. Der Drehbewegungssensor 24 erfasst eine Bewegung des Sensors im Raum um eine horizontale Achse 26. Der Drehbewegungssensor 24 ist derart in dem Deichselkopf 22 angeordnet, dass bei einer Schwenkbewegung entlang der Doppelpfeile A der Drehbewegungssensor 24 eine Drehung um seine Achse 26 ausführt, so dass eine resultierende Bewegung A' entsteht. Die Drehbewegung A' um die Achse 26 wird von dem Drehbewegungssensor erfasst und kontinuierlich oder inkrementell als eine Winkelgeschwindigkeit oder eine Winkelbeschleunigung ausgegeben.

Fig. 2 zeigt das deichselgeführte Flurförderzeug 10 aus Fig. 1 in einer Ansicht von oben. Gleiche Bauteile sind mit den gleichen Bezugszeichen wie in Fig. 1 bezeichnet. Die Deichsel 18 kann zum Lenken des Rades 16 entlang der Doppelpfeile B ausgelenkt werden. Je nach Ausgestaltung kann die Lenkbewegung entweder direkt mechanisch auf das angetriebene Rad 16 oder von einer elektrischen Lenkung auf einen Lenkantrieb für das gelenkte Rad 16 übertragen werden.

In dem Deichselkopf ist ein Drehbewegungssensor 28 vorgesehen, der eine Drehbewegung B' um die Achse 30 erfasst. Der Drehbewegungssensor 28 ist derart in dem Deichselkopf 22 angeordnet, dass die Achse 30 senkrecht zu der Achse 26 steht.

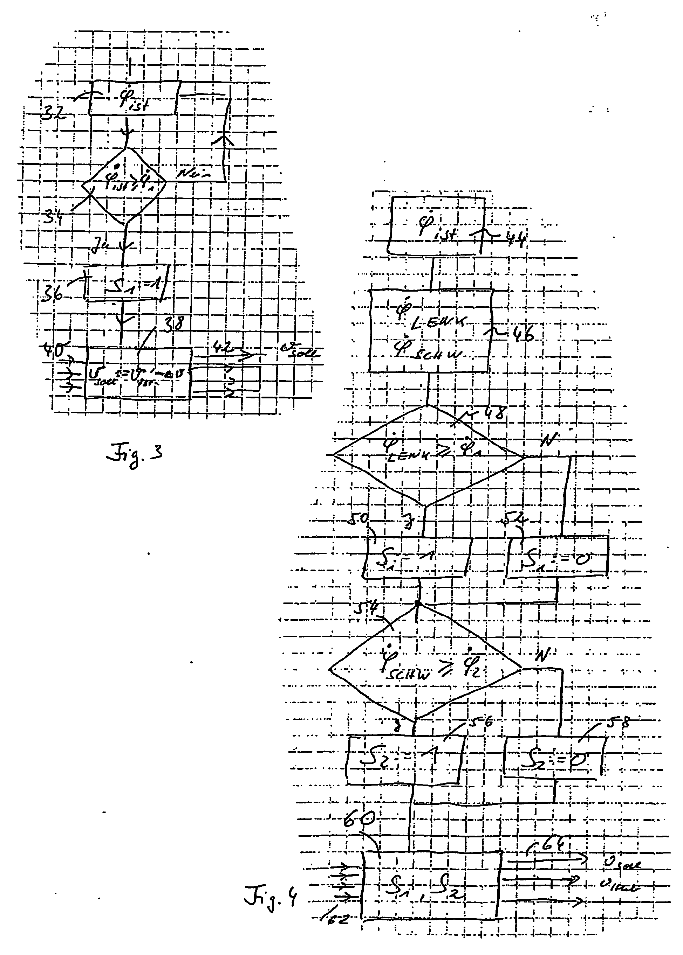

Die von den Drehbewegungssensoren 24 und 28 erfassten Winkelgeschwindigkeiten werden in einem Auswertemodul (nicht dargestellt), das im Deichselkopf angeordnet ist, ausgewertet. Bei dem Auswertemodul handelt es sich beispielsweise um einen CAN-Busprozessor, dessen Ausgangssignale über den Deichselarm 20 zu einer Betriebssteuerung weitergeleitet werden. Das Auswerteverfahren wird nachfolgend anhand von zwei Flussdiagrammen beschrieben:
Im Verfahrensschritt 32 wird die Winkelgeschwindigkeit ϕ̇*ᵢₛₜ* von einem Drehbewegungssensor erfasst. In der nachfolgenden Abfrage 34 wird der erfasste Wert für die Winkelgeschwindigkeit mit einem vorbestimmten Geschwindigkeitswert ϕ̇₁ verglichen. Liegt der erfasste Wert für die Geschwindigkeit oberhalb des vorbestimmten Werts ϕ̇₁ für die Winkelgeschwindigkeit, wird nachfolgend in Schritt 36 ein Schwellwert S1 generiert (S₁: = 1). Ist die erfasste Geschwindigkeit ϕ̇*ᵢₛₜ* kleiner als der vorbestimmte Wert ϕ̇₁ für die Winkelgeschwindigkeit, kehrt das Verfahren zu Schritt 32 zurück und die Winkelgeschwindigkeit ϕ̇*ᵢₛₜ* wird erneut gemessen.
Wenn das Steuersignal S₁ generiert wurde, wird dies an eine schematisch dargestellte Betriebssteuerung 38 weitergeleitet. An der Betriebssteuerung 38 liegen weitere Eingangswerte 40 an, die ebenfalls durch die Betriebssteuerung verarbeitet werden. In dem in Fig. 3 dargestellten Beispiel bewirkt das Steuersignal S₁, das die aktuelle Fahrgeschwindigkeit vᵢₛₜ um einen vorbestimmten Wert Δv reduziert wird, so dass ein neuer Sollwert vₛₒₗₗ für die Fahrgeschwindigkeit existiert, der kleiner als die aktuelle Fahrgeschwindigkeit ist. Der so bestimmte neue Sollwert für die Fahrgeschwindigkeit wird über 42 ausgegeben.

Der in Fig. 3 dargestellte Ablauf bewirkt also, dass wenn die Deichsel einer Winkelgeschwindigkeit bewegt wird, die größer ist als ϕ̇₁, automatisch die aktuelle Geschwindigkeit reduziert wird. Wichtig an diesem Verfahren ist, dass diese Reduktion der Fahrgeschwindigkeit unabhängig von der aktuellen Stellung der Deichsel erfolgt.

Fig. 4 zeigt ein zweites Ablaufdiagramm, bei dem in Schritt 44 die aktuelle Winkelgeschwindigkeit einer Bewegung der Deichsel mit ϕ̇*ᵢₛₜ* erfasst wird. In einem nachfolgenden Schritt 46 wird die erfasste Winkelgeschwindigkeit in eine Winkelgeschwindigkeit ϕ̇*ₗₑₙₖ* zur Lenkbewegung und ϕ̇*_{schw}* einer Schwenkbewegung zerlegt. Je nach Ausgestaltung des Drehbewegungssensors kann entweder die Zerlegung der Signale in dem Drehbewegungssensor selbst erfolgen oder es werden, wie in Fig. 1 und 2, durch zwei unabhängige Drehbewegungssensoren 24 und 28 die beiden Winkelgeschwindigkeiten ϕ̇*ₗₑₙₖ* und ϕ*_{schw}* separat voneinander erfasst.

In einem nachfolgenden Schritt wird die erfasste Winkelgeschwindigkeit um die Lenkachse ϕ̇*ₗₑₙₖ* mit einer ersten vorbestimmten Winkelgeschwindigkeit ϕ̇₁ verglichen. Ist die Winkelgeschwindigkeit der Lenkbewegung ϕ̇*ₗₑₙₖ* größer als die erste vorbestimmte Winkelgeschwindigkeit ϕ̇₁, so wird in Schritt 50 der erste Stellwert generiert (S₁: = 1). Liegt die Winkelgeschwindigkeit der Lenkbewegung unterhalb der ersten vorbestimmten Winkelgeschwindigkeit ϕ̇₁, so wird kein Steuersignal S₁ generiert (S1: = 0).

In einem Abfrageschritt 54 wird die gemessene Winkelgeschwindigkeit ϕ̇*_{schw}* mit einer zweiten vorbestimmten Winkelgeschwindigkeit ϕ̇₂ verglichen. Bei Überschreiten der zweiten vorbestimmten Winkelgeschwindigkeit ϕ̇₂ wird das Steuersignal S₂ in Schritt 56 generiert (S₂: = 1). Wird der zweite vorbestimmte Wert ϕ̇₂ von der Winkelgeschwindigkeit ϕ*_{schw}* unterschritten, so unterbleibt eine Erzeugung des zweiten Steuersignals in 58 (S₂: = 0).

Die Größe der vorbestimmten Wert ϕ̇₁ und ϕ̇₂ für die Winkelgeschwindigkeit kann gleich sein. Je nach Funktion der Betriebssteuerung, die durch die Bewegung der Deichsel in Schwenk- oder Lenkrichtung erfasst werden soll, können diese Werte aber auch unterschiedlich gesetzt sein.

In Verfahrensschritt 60 werden die Steuersignale S₁ und S₂ gemeinsam mit weiteren Eingangssignalen 62 ausgewertet, um Ausgangssignale 64 zu erzeugen, die beispielsweise einen Sollwert für die Fahrgeschwindigkeit vₛₒₗₗ oder für die Hubgeschwindigkeit V_{hub} angeben.

Für die Auswertung der Steuersignale durch die Betriebssteuerung des Flurförderzeugs gibt es verschiedenste Ansätze. Einige mögliche Ansätze sind in der nachfolgenden Tabelle zusammengefasst:

| | | |
|---|---|---|
| Abbremsen | / | S₂ |
| Beschleunigung reduziert | / | S₂ |
| Hub- oder Senkgeschwindigkeit | S₁ | S₂ |
| Geschwindigkeit und/oder Beschleunigung begrenzen | S₁ | / |
| Signalton | S₁ | S₂ |

Durch das Steuersignal S₂ kann beispielsweise ein Abbremsen des Fahrzeugs ausgelöst werden. Hierbei ist es möglich, vordefinierte Bremsprogramme vorzusehen, um das Fahrzeug in einer gewünschten Form beispielsweise langsam abzubremsen. Alternativ oder zusätzlich kann das Steuersignal S₂ auch dazu verwendet werden, die mit dem Flurförderzeug mögliche Beschleunigung zu reduzieren.

Alternativ oder zusätzlich können die Steuersignale S₁ und S₂ entweder einzeln oder in Kombination miteinander dazu verwendet werden, eine Hub- oder Senkgeschwindigkeit der Hubvorrichtung zu erhöhen oder zu erniedrigen. Das Steuersignal S₁ kann auch dazu eingesetzt werden, die Geschwindigkeit und/oder Beschleunigung des Flurförderzeugs zu begrenzen. Schließlich besteht auch die Möglichkeit, die alternativ oder zusätzlich eingesetzt werden kann, die Steuersignale S₁ und S₂ zu verwenden, um einen Signalton beispielsweise durch eine Hupe zu erzeugen.

Sollen mehrere dieser Funktionen durch die Betriebssteuerung realisiert werden, ist es hilfreich, unterschiedliche vorbestimmte Werte für die Winkelgeschwindigkeit zu definieren. So ist beispielsweise der vorbestimmte Wert für die Winkelgeschwindigkeit zum Auslösen der Hupe größer gewählt als der vorbestimmte Wert für die Reduzierung der Fahrgeschwindigkeit. Hierdurch entsteht die Situation, dass der Fahrer durch eine Bewegung der Deichsel mit mittlerer Geschwindigkeit beispielsweise die Fahrgeschwindigkeit reduziert und durch eine Bewegung der Deichsel mit sehr großer Winkelgeschwindigkeit, wie sie beispielsweise bei einem Auffahrunfall entsteht, die Hupe auslöst.

Auch können durch die vorbestimmte Winkelgeschwindigkeiten die Steuersignale so gewählt werden, dass bei eine ruckartigen Lenkbewegung ab einer bestimmten Fahrgeschwindigkeit die Steuerung jede weitere Fahrbeschleunigung verhindert oder die Fahrgeschwindigkeit leicht reduziert, ohne das Fahrzeug zu bremsen. Eine solche Auswertung der Steuersignale reduziert die Gefahr, dass eine aufgenommene Last beispielsweise bei einer schnellen oder ruckartigen Kurvenfahrt durch zu große Zentrifugalkräfte von der Gabel rutscht oder das gesamte Fahrzeug umkippt.

## Patentansprüche

1. Deichselgeführtes Flurförderzeug (10) mit einer Betriebssteuerung für einen Fahrantrieb und/oder Hubantrieb des Flurförderzeugs, **dadurch gekennzeichnet, dass** in einem Arm (20) oder einem Kopf (22) der Deichsel (18) ein Drehbewegungssensor (24, 28) angeordnet ist, der eine Bewegung (A, B) der Deichsel um mindestens eine Achse (26, 30) erfasst und an ein Auswertemodul weiterleitet, das ein Steuersignal (S, S₁, S₂) für die Betriebssteuerung des Fahrzeugs erzeugt, wenn die erfasste Bewegung der Deichsel einen vorbestimmten Wert überschreitet.

2. Deichselgeführtes Flurförderzeug nach Anspruch 1, **dadurch gekennzeichnet, dass** das Auswertemodul in dem Kopf (22) oder dem Arm (20) der Deichsel (18) angeordnet ist.

3. Flurförderzeug nach Anspruch 1 oder 2, **dadurch gekennzeichnet, dass** der Drehbewegungssensor (24, 28) eine Winkelgeschwindigkeit (ϕ̇) oder eine Winkelbeschleunigung (ϕ̈) erfasst.

4. Flurförderzeug nach einem der Ansprüche 1 bis 3, **dadurch gekennzeichnet, dass** der Drehbewegungssensor eine Bewegung der Deichsel (18) um ihre Lenkachse und eine Bewegung der Deichsel (18) um ihre Schwenkachse erfasst.

5. Flurförderzeug nach einem der Ansprüche 1 bis 3, **dadurch gekennzeichnet, dass** ein erster Drehbewegungssensor (28) eine Bewegung der Deichsel (18) um ihre Lenkachse und ein zweiter Drehbewegungssensor (24) eine Bewegung der Deichsel (18) um ihre Schwenkachse erfasst.

6. Flurförderzeug nach Anspruch 4 oder 5, **dadurch gekennzeichnet, dass** ein erstes Steuersignal (S₁) erzeugt wird, wenn die erfasste Bewegung um die Lenkachse einen vorbestimmten Wert überschreitet.

7. Flurförderzeug nach einem der Ansprüche 4 bis 6, **dadurch gekennzeichnet, dass** das Auswertemodul ein zweites Steuersignal (S₂) erzeugt, wenn die erfasste Bewegung um die Schwenkachse einen zweiten vorbestimmten Wert überschreitet.

8. Flurförderzeug nach einem der Ansprüche 1 bis 7, **dadurch gekennzeichnet, dass** die Betriebssteuerung ansprechend auf das Steuersignal eine Fahrgeschwindigkeit (vₛₒₗₗ) reduziert.

9. Flurförderzeug nach einem der Ansprüche 1 bis 8, **dadurch gekennzeichnet, dass** die Betriebssteuerung ansprechend auf das Steuersignal eine Beschleunigung des Fahrantriebs reduziert.

10. Flurförderzeug nach einem der Ansprüche 1 bis 9, **dadurch gekennzeichnet, dass** die Betriebssteuerung ansprechend auf das Steuersignal eine Hub- oder Senkgeschwindigkeit einer Hubvorrichtung reduziert.

## Claims

1. Industrial truck (10) led by a tow bar, with an operation control system for a travel drive and/or lifting drive of the industrial truck, **characterised in that** a rotational movement sensor (24, 28) is arranged in an arm (20) or a head (22) of the tow bar (18), which detects a movement (A, B) of the tow bar around at least one axis (26, 30) and forwards it to an analysing module which generates a control signal (S, S₁, S₂) for the operation control system of the industrial truck when the detected movement of the tow bar exceeds a predetermined value.

2. The industrial truck according to claim 1, **characterised in that** the analysing module is arranged in the head (22) or the arm (20) of the tow bar (18).

3. An industrial truck according to claim 1 or 2, **characterised in that** the rotational movement sensor (24, 28) detects an angular velocity (ϕ̇) or an angular acceleration (ϕ̇) .

4. An industrial truck according to any one of claims 1 to 3, **characterised in that** the rotational movement sensor detects a movement of the tow bar (18) around its steering axis, and a movement of the tow bar (18) around its pivot axis.

5. An industrial truck according to any one of claims 1 to 3, **characterised in that** a first rotational movement sensor (28) detects a movement of the tow bar (18) around its steering axis, and a second rotational movement sensor (24) a movement of the tow bar (18) around its pivot axis.

6. An industrial truck according to claim 4 or 5, **characterised in that** a first control signal (S₁) is generated when the detected movement around the steering axis exceeds a predetermined value.

7. An industrial truck according to any one of claims 4 to 6, **characterised in that** the analysing module generates a second control signal (S₂) when the detected movement around the pivot axis exceeds a second predetermined value.

8. An industrial truck according to any one of claims 1 to 7, **characterised in that** the operation control system reduces a travel velocity (Vₛₒₗₗ) in response to the control signal.

9. An industrial truck according to any one of claims 1 to 8, **characterised in that** the operation control system reduces an acceleration of the travel drive in response to the control signal.

10. An industrial truck according to any one of claims 1 to 9, **characterised in that** the operation control system reduces a lifting- or lowering speed of a lifting device in response to the control signal.

## Revendications

1. Chariot de manutention (10) commandé par timon, avec une commande de fonctionnement pour un entraînement de marche et/ou un entraînement de levage du chariot de manutention, **caractérisé en ce que** un capteur de rotation (24, 28) est arrangé dans un bras (20) ou une tête (22) du timon (18) qui détecte un mouvement (A, B) du timon autour d'au moins un axe (26, 30) et le transmet à un module d'analyse qui produit un signal de commande (S, S₁, S₂) pour la commande de fonctionnement du chariot de manutention quand le mouvement détecté du timon dépasse une valeur prédéterminée.

2. Chariot de manutention selon la revendication 1, **caractérisé en ce que** le module d'analyse est arrangé dans la tête (22) ou le bras (20) du timon (18).

3. Chariot de manutention selon la revendication 1 ou 2, **caractérisé en ce que** le capteur de rotation (24, 28) détecte une vitesse angulaire (ϕ̇) ou une accélération angulaire (ϕ̇).

4. Chariot de manutention selon l'une quelconque des revendications 1 à 3, **caractérisé en ce que** le capteur de rotation détecte un mouvement du timon (18) autour de son axe de commande, et un mouvement du timon (18) autour de son axe de pivotement.

5. Chariot de manutention selon l'une quelconque des revendications 1 à 3, **caractérisé en ce que** un premier capteur de rotation (28) détecte un mouvement du timon (18) autour de son axe de commande, et un deuxième capteur de rotation (24) détecte un mouvement du timon (18)
autour de son axe de pivotement..

6. Chariot de manutention selon la revendication 4 ou 5, **caractérisé en ce que** un premier signal de commande (S₁) est produit quand le mouvement détecté autour de l'axe de commande dépasse une valeur prédéterminée.

7. Chariot de manutention selon l'une quelconque des revendications 4 à 6, **caractérisé en ce que** le module d'analyse produit un deuxième signal de commande (S₂) quand le mouvement détecté autour de l'axe de pivotement dépasse une deuxième valeur prédéterminée.

8. Chariot de manutention selon l'une quelconque des revendications 1 à 7, **caractérisé en ce que** la commande de fonctionnement réduit une vitesse de marche (Vₛₒₗₗ) en fonction du signal de commande.

9. Chariot de manutention selon l'une quelconque des revendications 1 à 8, **caractérisé en ce que** la commande de fonctionnement réduit une accélération de l'entraînement de marche en fonction du signal de commande.

10. Chariot de manutention selon l'une quelconque des revendications 1 à 9, **caractérisé en ce que** la commande de fonctionnement réduit une vitesse de levage ou de descente d'un dispositif de levage en fonction du signal de commande.
